# EUROPEAN PATENT APPLICATION

(11) **EP 4 775 392 A1**
(43) Date of publication of application: **15.07.2026**
(21) Application number: 24899806.4
(22) Date of filing: 03.12.2024
(51) Int. Cl.: B32B 17/06, B32B 7/12, B32B 33/00, B32B 3/08, B60J 1/02, B60J 1/00, B60J 3/04

(54) **LAMINATED GLASS AND VEHICLE**

(30) Priority: 04.12.2023 CN 202311643537
(71) Applicant: Fuyao Glass Industry Group Co., Ltd., Fuqing, Fujian 350300 (CN)
(72) Inventor: WU, Hao, Fujian 350300 (CN); CAO, Jin, Fujian 350300 (CN); HUANG, Xia, Fujian 350300 (CN); LI, Jiang, Fujian 350300 (CN); LIAO, Zhongke, Fujian 350300 (CN)
(74) Representative: Patentanwälte Olbricht Buchhold Keulertz
(86) International application number: PCT/CN2024/136424
(87) International publication number: WO 2025/119168

(57) **Abstract**

Laminated glass and a vehicle. The laminated glass comprises: an outer glass plate (1), an inner glass plate (8), and a bonding layer for bonding the outer glass plate (1) and the inner glass plate (8); the laminated glass has an upper edge (202) and a lower edge (102), and the laminated glass comprises a dimming area (201) on the side close to the upper edge (202) and a visual area (101) on the side close to the lower edge (102), and a signal transmission area is arranged in the visual area (101); the bonding layer comprises a dimming element (5) and the dimming element (5) is located in the dimming area (201); and at least in the signal transmission area, the thickness of the bonding layer on the side close to the upper edge (202) is greater than the thickness of the bonding layer on the side close to the lower edge (102).

## Description

### RELATED APPLICATION

The present application claims the priority of the Chinese invention patent application No. 202311643537.5 submitted on December 04, 2023, the entire disclosure of which is incorporated by reference as a part of the present application.

### TECHNICAL FIELD

The present disclosure relates to the technical field of automotive glass, in particular, to a laminated glass and a vehicle.

### BACKGROUND

Currently, a panoramic front windshield has been used in electric vehicles. Comparing with an existing front windshield, in the panoramic front windshield, on the basis of the existing front windshield, the top edge of the front windshield is extended towards the roof side, such that it includes at least a part of the roof, thereby providing the driver and passengers inside the vehicle with an extended vertical field of view.

For the panoramic front windshield above-mentioned, although the field of view for the driver and passengers is expanded, it is considered that there may be a problem of excessive light intensity in some scenarios. To address the problem of excessive light intensity, a current solution is to present a corresponding shadow gradient design in the upper-middle part of the glass, such as forming a gradient color band in the upper-middle part of the glass.

However, with the continuous development of technology, the functional demands for the panoramic front windshield are also constantly increasing. In order to better satisfy the driving and riding experiences of the users, it is necessary to further optimize the existing front windshields.

### SUMMARY

In view of the deficiencies existing in the prior art, embodiments in the present disclosure provide a laminated glass and a vehicle, which can meet the users' demand for color changing of the overhead sunroof, and also can meet the requirement for intelligence improvement of the panoramic front windshields, thereby improving the users' driving and riding experiences.

The specific technical solutions of the embodiments in the present disclosure are as follows.

A laminated glass comprising:
an outer glass plate, an inner glass plate, and a bonding layer for bonding the outer glass plate and the inner glass plate; the laminated glass has an upper edge and a lower edge, the laminated glass comprises a dimming area on a side close to the upper edge and a visual area on a side close to the lower edge, and a signal transmission area is provided in the visual area; the bonding layer comprises a dimming element located in the dimming area; at least in the signal transmission area, a thickness of the bonding layer on the side close to the upper edge is greater than a thickness of the bonding layer on the side close to the lower edge.

In an optional embodiment, the laminated glass further comprises a first shielding layer provided on an inner surface of the outer glass plate, and the first shielding layer covers at least a side of the dimming element close to the lower edge of the laminated glass.

In an optional embodiment, the laminated glass has a length ranging from 1300 mm to 1900 mm in an extension direction from the lower edge to the upper edge.

In an optional embodiment, the dimming element comprises any one of a liquid crystal dye film, an electrochromism film, a suspended particle device film, and a polymer dispersed liquid crystal film.

In an optional embodiment, the bonding layer comprises a colored layer with a visible light transmittance of less than 50%, the colored layer at least partially covers the dimming area, and the colored layer is stacked with the dimming element.

In an optional embodiment, the bonding layer comprises at least a first bonding layer and a second bonding layer, and the first bonding layer and the second bonding layer cover two surfaces of the dimming element, respectively.

In an optional embodiment, the colored layer is located in the first bonding layer or in the second bonding layer, and the colored layer is a uniformly colored film layer or is a gradient film layer whose color gradually lightens in a direction from the upper edge to the lower edge.

In an optional embodiment, the colored layer is located in the first bonding layer, the first bonding layer is a colored layer, or the first bonding layer comprises a transparent film covering the visual area and a colored layer covering the dimming area, wherein the transparent film and the colored layer have a same thickness; and the second bonding layer is a transparent film.

In an optional embodiment, when the first bonding layer comprises the transparent film covering the visual area and the colored layer covering the dimming area, the first shielding layer covers at least a splicing position between the transparent film and the colored layer.

In an optional embodiment, the colored layer is located in the second bonding layer, the first bonding layer is a transparent film; the second bonding layer is a gradient film layer whose color gradually lightens in the direction from the upper edge to the lower edge.

In an optional embodiment, at least in the signal transmission area, a thickness of the second bonding layer on the side close to the upper edge is greater than a thickness of the second bonding layer on the side close to the lower edge.

In an optional embodiment, the second bonding layer is provided with a second notch in which a wedge-shaped film is provided, and a thickness of the wedge-shaped film gradually decreases in a direction from the upper edge to the lower edge.

In an optional embodiment, a maximum thickness difference between the wedge-shaped film and the second bonding layer is within 0.5 mm.

In an optional embodiment, the bonding layer further comprises a carrier layer serving as a carrier for the dimming element, and the carrier layer is provided with a first notch for being filled with the dimming element.

In an optional embodiment, a width from the first notch to an edge of the carrier layer is at least 30 mm.

In an optional embodiment, a thickness of the carrier layer is the same as a thickness of the dimming element; or when the first notch is filled with the first bonding layer, a sum of thicknesses of the first bonding layer and the dimming element is equal to a thickness of the carrier layer.

In an optional embodiment, the laminated glass further comprises a second shielding layer provided on an inner surface or an outer surface of the inner glass plate, and the second shielding layer covers at least a side of the dimming element close to the lower edge of the laminated glass.

A vehicle comprises the laminated glass as described above.

The technical solutions of the present disclosure have the following significant advantageous effects.

In the laminated glass provided in the embodiments in the present disclosure, by providing a dimming element in the dimming area on the side close to the upper edge, an intelligent dimming function can be achieved above the heads of the driver and passengers, thereby meeting the driver and passengers' demand for a color-changing function of the overhead sunroof. By providing a signal transmission area in the visual area on the side close to the lower edge, the requirement for intelligence of the laminated glass for the large front windshield can be met. Furthermore, by providing, in the signal transmission area, a bonding layer with a thickness that gradually decreases from top to bottom at least in a range corresponding to the driver's line of sight, a secondary phase value of the glass can be corrected, so that ghost images can be reduced as much as possible or even eliminated, and the accuracy of an advanced driving assistance system can be further improved.

Referring to the following descriptions and figures, specific embodiments in the present disclosure are disclosed in detail, and the methods in which the principle of the present disclosure can be adopted are clearly pointed out. It should be appreciated that the embodiments in the present disclosure are not limited thereby in scope. The embodiments in the present disclosure include a lot of alternations, modifications, and equivalents within the spirit and scope of the clauses of the appended claims. Features that are described and/or illustrated with respect to one embodiment may be used in the same way or in a similar way in one or more other embodiments, in combination with or instead of the features in the other embodiment(s).

### BRIEF DESCRIPTION OF DRAWINGS

The figures described herein are used for explanation purposes only and are not intended to limit the scope of the present disclosure in any way. In addition, the shapes, proportions etc. of the components in the figures are only schematic to help understanding the present disclosure, and are not provided to specifically define the shapes, proportions etc. of the components in the present disclosure. A person skilled in the art, under the teaching of the present disclosure, can select various possible shapes, proportions etc. according to the specific situations to implement the present disclosure.
FIG. 1 is a schematic structural diagram for the laminated glass according to an embodiment in the present disclosure;
FIG. 2 is a schematic structural diagram for the laminated glass according to an embodiment in the present disclosure;
FIG. 3 is a schematic structural diagram for the laminated glass according to an embodiment in the present disclosure;
FIG. 4 is a schematic exploded view for the laminated glass provided in a first embodiment in the present disclosure;
FIG. 5 is a schematic exploded view for the laminated glass provided in a second embodiment in the present disclosure;
FIG. 6 is a schematic exploded view for the laminated glass provided in a third embodiment in the present disclosure;
FIG. 7 is a schematic exploded view for the laminated glass provided in a fourth embodiment in the present disclosure;
FIG. 8 is a schematic exploded view for the laminated glass provided in a fifth embodiment in the present disclosure;
FIG. 9 is a schematic exploded view for the laminated glass provided in a sixth embodiment in the present disclosure;
FIG. 10 is a schematic exploded view for the laminated glass provided in a seventh embodiment in the present disclosure;
FIG. 11 is a schematic exploded view for the laminated glass provided in an eighth embodiment in the present disclosure;
FIG. 12 is a schematic exploded view for the laminated glass provided in a ninth embodiment in the present disclosure;
FIG. 13 is a schematic exploded view for the laminated glass provided in a tenth embodiment in the present disclosure;
FIG. 14 is a schematic exploded view for the laminated glass provided in an eleventh embodiment in the present disclosure;
FIG. 15 is a schematic exploded view for the laminated glass provided in a twelve embodiment in the present disclosure;
FIG. 16 is a schematic exploded view for the laminated glass provided in a thirteenth embodiment in the present disclosure;
FIG. 17 is a schematic diagram for splicing of a carrier layer with a dimming element provided in an embodiment in the present disclosure;
FIG. 18 is a schematic diagram for a light path in a signal transmission area provided in an embodiment in the present disclosure;
FIG. 19 is a schematic diagram for the principle of determining a position, shape, and dimension of a wedge-shaped film based on the schematic diagram for the light path in the signal transmission area as provided in FIG. 18.

### Reference signs in the present disclosure:

1. outer glass plate;
2. colored layer;
3. first bonding layer;
4. carrier layer;
41. first notch;
5. dimming element;
6. second bonding layer;
61. second notch;
7. wedge-shaped film;
8. inner glass plate;
9. first shielding layer;
10. second shielding layer;
101. visual area;
201. dimming area;
202. upper edge;
102. lower edge;
301. human head model.

### DESCRIPTION OF EMBODIMENTS

In the following, the technical solutions of the present disclosure will be described in detail in conjunction with the figures and specific embodiments. It should be appreciated that these embodiments are merely for illustrating the present disclosure rather than for limiting the scope of the present disclosure. Any equivalent amendments made by a person skilled in the art to the present disclosure after reading the present disclosure should fall within the scope defined by the appended claims of the present disclosure.

It should be clearly stated that when an element is referred to as being "provided on" another element, it may be directly on the another element, or an intervening element may exist. When an element is referred to as being "connected to" another element, it may be directly connected to the another element, or an intervening element may exist. The terms "vertical", "horizontal", "upper", "lower", "left", "right" and similar expressions used herein are for explanation purposes only and are not intended to represent a unique embodiment.

Unless otherwise defined, all the technical and scientific terms used in the present disclosure have the same meaning as commonly understood by a person skilled in the art belonging to the technical field of the present disclosure. The terms used in the specification of the present disclosure are for the purpose of describing the specific embodiments only, and are not intended to limit the present disclosure. The term "and/or" used herein includes any and all combinations of one or more of the associated listed items.

The present disclosure provides a laminated glass, which, when applied to a panoramic front windshield of a vehicle, can meet the users' demand for color changing of the overhead sunroof, and also can meet the requirement for intelligence improvement of the large front windshields, thereby improving the users' driving and riding experiences.

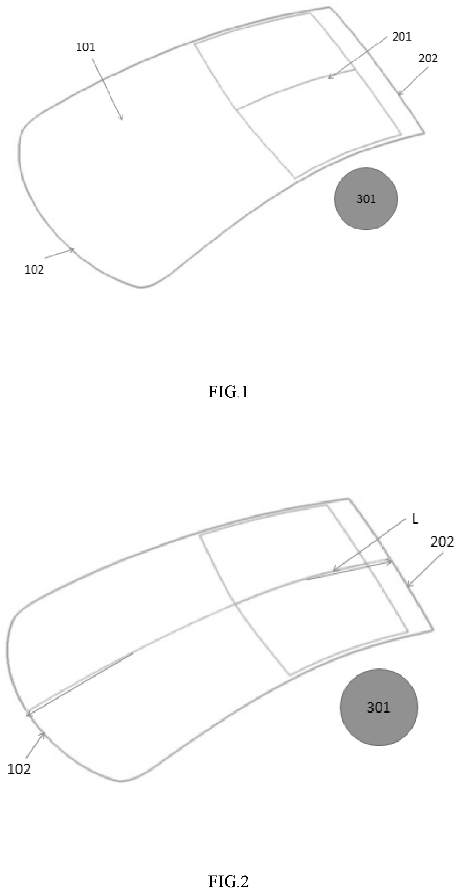

Please refer to FIGS. 1 to 16 comprehensively. The embodiments in the present disclosure provide a laminated glass, and the laminated glass may comprise an outer glass plate 1, an inner glass plate 8, and a bonding layer for bonding the outer glass plate 1 and the inner glass plate 8. The laminated glass has an upper edge 202 and a lower edge 102. The laminated glass comprises a dimming area 201 on a side close to the upper edge 202 and a visual area 101 on a side close to the lower edge 102. A signal transmission area is provided in the visual area 101. The bonding layer comprises a dimming element 5 located in the dimming area 201. At least in the signal transmission area, a thickness of the bonding layer on the side close to the upper edge 202 is greater than a thickness thereof on the side close to the lower edge 102.

In the embodiments in the present disclosure, the laminated glass mainly comprises the outer glass plate 1, the inner glass plate 8, and the bonding layer. In the embodiments in the present disclosure, explanations are given primarily by taking an application of the laminated glass to a panoramic front windshield of a vehicle as an example. When the laminated glass is applied to other scenarios, reference can be made to the present disclosure.

Please refer to FIGS. 1, 2, and 3 in conjunction. For the panoramic front windshield of a vehicle, it comprises a front windshield of the vehicle and a portion that extends from a top of the front windshield towards the vehicle roof side, forming corresponding visual area 101 and dimming area 201. The visual area 101 is substantially located at a lower-middle portion of the panoramic front windshield. The dimming area 201 is substantially located at an upper portion of the panoramic front windshield, corresponding to the overhead position of the front-row driver and passenger. As shown in FIG. 1, the dimming area 201 is specifically an area capable of covering the front human head model 301. The visual area 101 is located at the position of the front windshield of the vehicle.

As shown in FIG. 2, for the panoramic front windshield, it has a length L ranging from 1300 millimeters (mm) to 1900 mm in an extension direction along the entire laminated glass from the lower edge 102 to the upper edge 202, and thus the panoramic front windshield structure of the vehicle can be formed. The length L may also be adaptively adjusted according to different influencing factors such as vehicle models and manufacturing processes. Situations where the length L is less than 1300 mm or greater than 1900 mm are not completely excluded in the embodiments in the present disclosure.

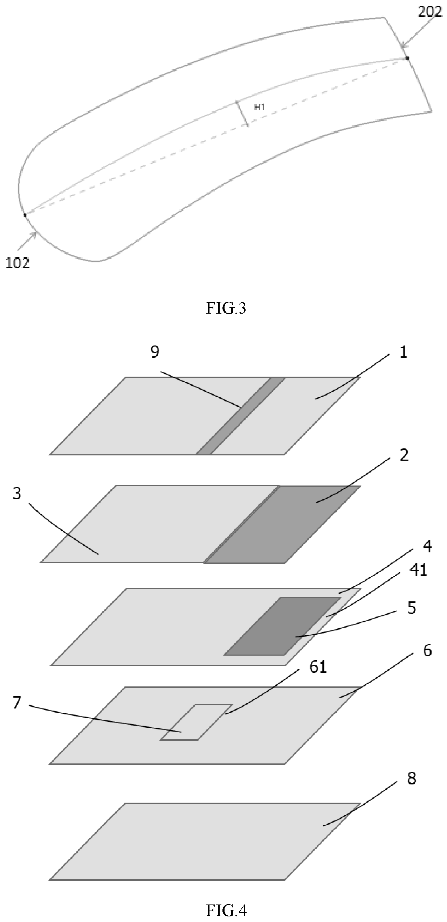

As shown in FIG. 3, for the panoramic front windshield, it has a certain curvature in the extension direction from the lower edge 102 to the upper edge 202. A connection line between the lower edge 102 and the upper edge 202 is taken as a reference line, and a maximum distance (i.e., a spherical dimension) H1 from the laminated glass to the reference line is at least 50 mm. The spherical dimension H1 may also be adaptively adjusted according to different influencing factors such as vehicle models and manufacturing processes, and situations where the spherical dimension is less than 50 mm are not excluded.

The outer glass plate 1 includes a first surface and a second surface opposite to each other, wherein the first surface is an outer surface in contact with an external environment of the vehicle. The inner glass plate 8 includes a third surface and a fourth surface opposite to each other, wherein the fourth surface is an inner surface in contact with an internal environment of the vehicle.

The outer glass plate 1 and the inner glass plate 8 need to meet predetermined transmittance requirements. Specifically, the outer glass plate 1 and the inner glass plate 8 both need to have a transmittance of greater than 70%. Specifically, a glass color composition of the outer glass plate 1 and the inner glass plate 8 may be SG/G/C (dark green/green/transparent) which may be arbitrarily combined without being limited to an inside-outside order. When the laminated glass is applied to the panoramic front windshield of vehicles, a single-layer thickness of the outer glass plate 1 and the inner glass plate 8 is ≥ 2.0 mm, which ensures, on one hand, the yield rate during production, and on the other hand, the reliability and safety during use.

The bonding layer is located at an intermediate layer of the laminated glass, and its main function is to bond two adjacent surfaces to each other. When the bonding layer is applied to a panoramic front windshield of a vehicle, a material of the bonding layer includes and is not limited to polyvinyl butyral (PVB), ethylene-vinyl acetate copolymer (EVA), polyolefin thermoplastic elastomer (POE), polycarbonate (PC), or polymethyl methacrylate (PMMA). In some specific embodiments, the main material of the bonding layer may be polyvinyl butyral (abbreviated as PVB). PVB has excellent adhesion to glass, and has optical transparency after lamination. In some embodiments, a thickness of the bonding layer ranges from 0.3 mm to 2 mm. In some specific embodiments, a thickness of the bonding layer may be 0.38 mm, 0.76 mm, 1.14 mm, 1.52 mm, etc.

The number of layers in the bonding layer may vary depending on the specific composition of the laminated glass, the disposing of the respective functional layers, and the like. Specifically, it may include at least two layers. For example, it may include two layers, three layers, or more than three layers. For example, when the bonding layer includes a first bonding layer 3 and a second bonding layer 6, the first bonding layer 3 and the second bonding layer 6 cover the two surfaces of the dimming element 5, respectively. In the following specification, descriptions will be given in conjunction with various embodiments.

The laminated glass includes a dimming area 201 on a side close to the upper edge 202 and a visual area 101 on a side close to the lower edge 102. A signal transmission area is provided in the visual area 101. Specifically, the signal transmission area is an area through which optical signals of a device such as a laser radar, a sensor, or an Advanced Driving Assistance System (ADAS) related device pass. A high transmittance can be achieved within the signal transmission area especially for infrared signals, thereby meeting the requirement for intelligence of the laminated glass of large front windshields.

The ADAS, namely, Advanced Driving Assistance System, uses various sensors (such as a millimeter wave radar, a laser radar, a single/binocular camera, and a satellite navigator) installed on a vehicle to sense a surrounding environment, collect data, identify, detect and track static and dynamic objects, and perform systematic calculation and analysis in conjunction with navigation map data at any time during the driving of the vehicle, so that the driver is enabled to be aware of potential dangers in advance, and therefore the comfort and safety of vehicle driving are effectively improved.

At least in the signal transmission area, a thickness of the bonding layer on the side close to the upper edge 202 is greater than a thickness thereof on the side close to the lower edge 102. By providing the bonding layer with a thickness that gradually decreases from top to bottom in the signal transmission area, the optical secondary phase requirements can be met.

Specifically, an incident ray enters the first surface (i.e., the outer surface) of the outer glass plate 1 at a specific incident angle, and passes through the laminated glass to reach an observation point. The ray bends (that is, refraction of light occurs) as it passes through the laminated glass. The refraction of light causes an initial image of the observed object to shift/deviate. Furthermore, some light of the incident ray entering the laminated glass is reflected back by the fourth surface (i.e., the inner surface) of the inner glass plate 8 and exits the laminated glass. Some of the reflected light is again reflected back by the first surface of the outer glass plate 1, causing ghosting in the image received at the observation point. In the present disclosure, by providing the bonding layer with a thickness that gradually decreases from top to bottom in the signal transmission area, ghost images can be reduced as much as possible or even eliminated.

Specifically, the bonding layer provided in the signal transmission area may be in the form of a wedge-shaped film, by means of which the secondary phase value of the glass can be improved. The wedge-shaped film may be provided by filling within the signal transmission area. When the wedge-shaped film 7 is provided in the second bonding layer 6 by filling, a maximum thickness difference between the wedge-shaped film 7 and the second bonding layer 6 is controlled within 0.5 mm, so as to avoid an optical deformation of the glass due to an excessive thickness difference. In some further embodiments, a maximum thickness difference between the wedge-shaped film 7 and the second bonding layer 6 is controlled within 0.4 mm, or within 0.3 mm, or within 0.2 mm.

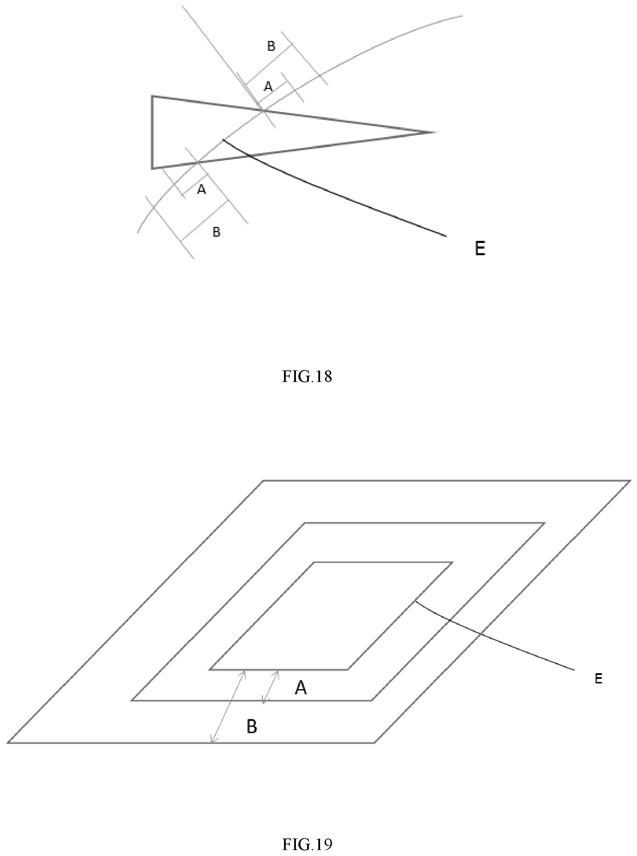

When the wedge-shaped film 7 is provided by filling, a second notch 61 may be provided in the second bonding layer 6. Since the second notch 61 is filled with the wedge-shaped film 7, the wedge-shaped film 7 matches the second notch 61 in shape. Please refer to FIG. 18 and FIG. 19 in conjunction, the position, shape, and dimension of the wedge-shaped film 7 may be determined in the following way: the intersection lines between the optical paths in the signal transmission area and the inner surface of the glass form a closed shape E, and the wedge-shaped film 7 is obtained by equidistant translation based on the closed shape E. A distance A from a filling area corresponding to the second notch 61 to the intersection lines is ≥ 1.5 mm. In certain cases, when the boundary requirements are relatively high, in order to avoid the ink printing boundary, A is ≥ 10 mm. In order to ensure the functionality and operability of the filling area, B is ≥ 10 mm + A. Under the premise of not affecting the optical performance of other areas, the larger B is, the better.

Specifically, the shape of the second notch 61 may be a square, a rectangle, a trapezoid, etc. In certain specific embodiments, a minimum height of the second notch 61 is ≥ 30 mm, and a minimum width of the second notch 61 is ≥ 30 mm.

Furthermore, it is also feasible to provide a single-piece wedge-shaped film with a gradually changing thickness in the entire area of the laminated glass. The specific angular of the wedge-shaped film may be customized according to the vehicle to which it is actually applied, and is subject to theoretical data simulation. The present disclosure gives no specific limitation to this.

The bonding layer further includes a dimming element 5 located in the dimming area 201. The dimming element 5 is used to realize an intelligent dimming function of the dimming area 201 above the heads of the driver and passengers. The dimming element adopts a film structure, so that it can be better provided in the bonding layer.

Specifically, the dimming element 5 may be at least one of a Liquid Crystal dye (LC dye) film, an Electrochromism (EC) film, a Suspended Particle Device (SPD) film, and a Polymer Dispersed Liquid Crystal (PDLC) film. Of course, the dimming element 5 may also be selected from other forms of films, and is not limited to the above description. A person skilled in the art, inspired by the technical essence of the present disclosure, may also make other alternations, which should all be included in the scope of protection of the present disclosure so long as the functions and effects that they achieve are identical or similar to those achieved by the present disclosure.

In the embodiments in the present disclosure, descriptions are given by taking the selection of an EC film as the dimming element 5 as an example. When other forms of films are selected as the dimming element 5, reference may be adaptively made to the embodiments for the EC film.

When an EC film is selected as the dimming element 5, the EC film is composed of five sequentially disposed layers: a PET protective layer, an electrochromic layer, a solid electrolyte, an ion storage layer, and a PET protective layer. Correspondingly, the bonding layer may further include a carrier layer 4 serving as a carrier for the dimming element 5. The carrier layer 4 is provided with a first notch 41 for being filled with the dimming element 5. The position of the dimming element 5 is fixed by the carrier layer 4, so that a stable bonding can be better formed between the dimming element 5 and the glass, and at the same time the carrier layer can serve to protect the dimming element 5.

In some embodiments, a thickness of the carrier layer 4 may be the same as a thickness of the dimming element 5. Specifically, when the dimming element 5 is provided while a PVB film serves as a carrier, a PVB film with a certain thickness may be selected, such as a transparent PVB film with a thickness of 0.38 mm. The PVB film serving as the carrier is defined as the carrier layer 4. The first notch 41 may be provided in the carrier layer 4 at a position corresponding to the dimming area 201, and the position of the first notch 41 directly faces the overhead area of the front-row driver and passenger. The first notch 41 is used for being filled with the dimming element 5, such as an EC film. A thickness of the EC film is identical or similar to a thickness of the carrier layer 4, which can avoid the formation of an obvious thickness difference. For example, when the thickness of the carrier layer 4 is 0.38 mm, the thickness of the EC film is also 0.38 mm, ensuring that the EC film is provided on a film of an equal thickness so as to achieve the best splicing effect.

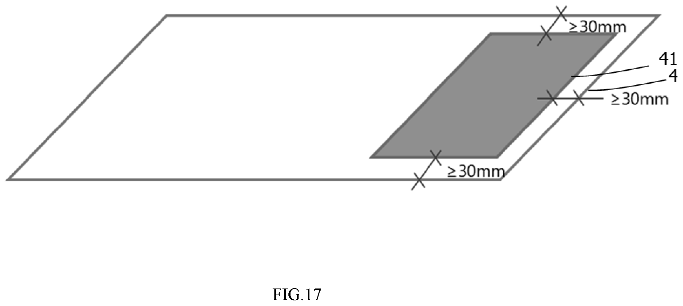

Please refer to FIG. 17. A width from the first notch 41 to an edge of the carrier layer 4 is ≥ 30mm, which ensures reliable peripheral sealing of the dimming element 5 to prevent moisture from entering and causing a functional failure of the dimming element 5.

The first notch 41 may be in a regular or an irregular shape, such as a rectangle or a trapezoid. Of course, the specific shape of the first notch 41 is not limited to the aforementioned examples, but may vary depending on the constructions, etc. of the vehicles to which it is applied. The present disclosure gives no specific limitation to this.

For the laminated glass provided in the embodiments in the present disclosure, by providing the dimming element 5 in the dimming area 201 on the side close to the upper edge 202, an intelligent dimming function can be achieved above the heads of the driver and passengers, thereby meeting the driver and passengers' demand for color-changing and sun-shading functions of the overhead sunroof. By providing the signal transmission area in the visual area 101 on the side close to the lower edge 102, the requirement for intelligence of the panoramic front windshield can be met. Furthermore, by providing, in the signal transmission area, a bonding layer with a thickness that gradually decreases from top to bottom at least in a range corresponding to the driver's line of sight, a secondary phase value of the glass can be corrected, so that ghost images can be reduced as much as possible or even eliminated, the optical interference to which the ADAS-related optical device is subjected can thus be reduced, and the accuracy of an advanced driving assistance system can be further improved.

Further, in some embodiments, the laminated glass may further comprise a first shielding layer 9 provided on the inner surface (i.e., the second surface) of the outer glass plate 1. The first shielding layer 9 covers at least the side of the dimming element 5 close to the lower edge 102 of the laminated glass, ensuring that the trace of splicing between the boundary of the dimming element 5 and the PVB (carrier layer 4) is not visible from the outside of the vehicle.

Specifically, the first shielding layer 9 may be formed by ink printing. When the first shielding layer 9 is formed by ink printing, the manufacturing difficulty is low, and no negative impact would be produced on the molded surface of the laminated glass.

Of course, the formation method of the first shielding layer 9 is not limited to the aforementioned example, that is, not limited to printing of patterns and shapes, but only needs to achieve the shielding function. A person skilled in the art, inspired by the technical essence of the present disclosure, may also make other alternations, which should all be included in the scope of protection of the present disclosure so long as the functions and effects that they achieve are identical or similar to those achieved by the present disclosure.

An effective shielding width of the first shielding layer 9 is ≥ 5mm. Specifically, the first shielding layer 9 may be a strip-shaped area with a certain width. Of course, the specific shape configuration of the first shielding layer 9 is not specifically limited in the present disclosure, but only needs to meet the aesthetic requirement of having a good appearance.

Furthermore, in some embodiments, the first shielding layer 9 may also be provided along and cover an edge of the outer glass plate 1 to realize the function of shielding the edge of the laminated glass, such that when the laminated glass is installed on a vehicle body, the structure at the joint between the glass and the vehicle body can be prevented from being visible from the outside of the vehicle, thereby achieving an aesthetic effect.

Furthermore, in some embodiments, the laminated glass may further comprise a second shielding layer10 provided on the inner surface or the outer surface of the inner glass plate 8, and the second shielding layer 10 covers at least the side of the dimming element 5 close to the lower edge 102 of the laminated glass.

The inner surface (i.e., the third surface) or the outer surface (i.e. the fourth surface) of the inner glass plate 8 may be provided with the second shielding layer. By providing the second shielding layer 10 in the laminated glass to cover at least the side of the dimming element 5 close to the lower edge 102 of the laminated glass, it is ensured that the trace of splicing between the boundary of the dimming element 5 and the PVB (carrier layer 4) is not visible from the inside of the vehicle when there is sufficient light inside the vehicle, such as when a lighting device with high luminance is turned on.

Furthermore, in some embodiments, the second shielding layer 10 may also be provided along and cover an edge of the inner glass plate 8 to realize the function of shielding the edge of the laminated glass, such that when the laminated glass is installed on a vehicle body, the structure at the joint between the glass and the vehicle body can be prevented from being visible from the inside of the vehicle, thereby achieving an aesthetic effect.

In some embodiments, the bonding layer comprises a colored layer 2 with a visible light transmittance of less than 50%. The colored layer 2 at least partially covers the dimming area 201, and the colored layer 2 is stacked with the dimming element 5. In some embodiments, the colored layer 2 completely covers the dimming area 201. Alternatively, in some other embodiments, the dimming area 201 completely covers the colored layer 2.

The colored layer 2 is mainly used in combination with the dimming element 5. For example, when an EC film is used as the dimming element 5, the EC film enables an overall visible light transmittance (TL) of the transparent laminated glass to vary within a range of 10% to 60%. However, when it is used in combination with the colored layer 2 having a lower visible light transmittance, such as when a gray PVB film is used as the colored layer 2, the overall visible light transmittance (TL) of the laminated glass is allowed to vary within a range of 2% to 10%. The specific color of the colored layer 2 is not limited to gray in the aforementioned example, but may also be other colors. The range of adjustment of the visible light transmittance (TL) by the dimming element 5 is not limited to the aforementioned range of 10% to 60%, or 2% to 10%. The specific color of the colored layer 2 is not limited in the present disclosure.

Alternatively, in some embodiments, when the bonding layer 2 includes a colored layer 2, the colored layer 2 is also provided in the first notch 41, and a sum of thicknesses of the colored layer 2 and the dimming element 5 is equal to a thickness of the carrier layer 4. For example, a PVB film with a thickness of 0.76 mm may be selected as the carrier layer 4, a colored PVB film with a thickness of 0.38 mm may be selected as the colored layer 2, and an EC film with a thickness of 0.38 mm may be selected as the dimming element 5. When the colored layer 2 is provided in the first notch 41 by filling, the colored layer 2 is consistent with the dimming element 5 in dimension. When the colored layer 2 is provided in the first notch 41 by filling, since the entire periphery of the colored layer 2 can be effectively constrained by the border of the first notch 41 during filling, the yield rate of manufacturing the laminated glass can be increased.

Furthermore, in some embodiments, the colored layer 2 may be a gradient film whose color gradually lightens from the upper edge to the lower edge. If an area of the gradient film is consistent with an overall area of the bonding layer, a side of the gradient film close to the visual area is transparent, so as not to affect the line of sight of the driver and passengers. In certain specific embodiments, the visible light transmittance within the visual area is greater than 70%.

In the following, the laminated glass provided in the present disclosure will be described in detail in conjunction with specific figures and embodiments.

As shown in FIG. 4, in a first embodiment, the laminated glass comprises an outer glass plate 1, a first bonding layer 3, a carrier layer 4, a dimming element 5, a second bonding layer 6, a wedge-shaped film 7, an inner glass plate 8, and a first shielding layer 9.

The first shielding layer 9 is located on the inner surface of the outer glass plate 1, and is mainly used for shielding a splicing position of the dimming element 5 to prevent it from affecting the overall appearance of the vehicle when viewed from the outside. The first shielding layer 9 may be a strip-shaped area with a certain width, and the width of the strip-shaped area is at least 5 mm. The first shielding layer 9 is used for shielding at least the splicing position of the dimming element 5 on the lower side, and the splicing position at that place has a relatively greater probability of affecting the appearance. Of course, situations where the first shielding layer 9 fully covers the entire splicing position of the dimming element 5 are not excluded.

The colored layer 2 is located in the first bonding layer 3. The first bonding layer 3 includes a transparent PVB film and the colored layer 2 of the same thickness, and the first bonding layer 3 is formed by splicing of the transparent PVB film and the colored layer 2. The first shielding layer 9 covers at least the splicing position between the transparent PVB film and the colored layer 2. Specifically, the first bonding layer 3 includes a transparent PVB film with a thickness of 0.38 mm and a colored PVB film with a thickness of 0.38 mm, and the two films of the same thickness are spliced together to form the first bonding layer 3.

The carrier layer 4 is provided with a first notch 41 for being filled with the dimming element 5. A thickness of the carrier layer 4 is the same as a thickness of the dimming element 5. Specifically, a transparent PVB film with a thickness of 0.38 mm may be selected as the carrier layer 4, and an EC film with a thickness of 0.38 mm may be selected as the dimming element 5.

The second bonding layer 6 is provided with a second notch 61. A wedge-shaped film 7 is provided within the second notch 61, and a thickness of the wedge-shaped film 7 gradually decreases in a direction from the upper edge 202 to the lower edge 102. Specifically, a single-piece transparent PVB film with a thickness of 0.76 mm may be selected as the second bonding layer 6, and the second notch 61 is provided in the second bonding layer 6 at a position corresponding to the signal transmission area, for being filled with the wedge-shaped film 7.

In this embodiment, the wedge-shaped film 7 is provided in the second bonding layer 6 by filling, which can effectively reduce the thickness of the laminated glass, thereby reducing the production cost. Furthermore, since the entire periphery of the wedge-shaped film 7 can be effectively constrained by the second notch 61 during filling, the yield rate can be ensured during the laminated glass manufacturing process.

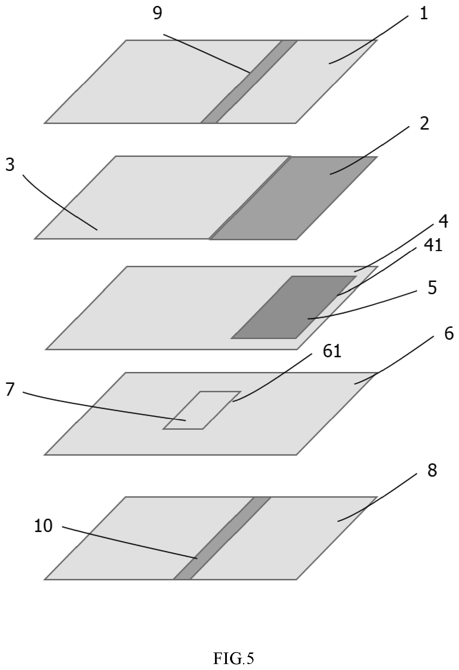

As shown in FIG. 5, in a second embodiment, the laminated glass comprises an outer glass plate 1, a first bonding layer 3, a carrier layer 4, a dimming element 5, a second bonding layer 6, a wedge-shaped film 7, an inner glass plate 8, a first shielding layer 9, and a second shielding layer 10.

The second embodiment differs from the above first embodiment mainly in that the laminated glass further comprises a second shielding layer 10. The second shielding layer 10 is provided on the inner surface of the inner glass plate 8, and the second shielding layer 10 covers at least the side of the dimming element 5 close to the lower edge 102 of the laminated glass.

By providing the second shielding layer 10 in the laminated glass to cover at least the side of the dimming element 5 close to the lower edge 102 of the laminated glass, it is ensured that the trace of splicing between the boundary of the dimming element 5 and the PVB film (carrier layer 4) is not visible from the inside of the vehicle when there is sufficient light inside the vehicle, such as when a lighting device with high luminance is turned on. When the laminated glass is provided with both the first shielding layer 9 and the second shielding layer 10, the second shielding layer 10 may be provided to be overlapped with the first shielding layer 9, that is, both of them cover the splicing position of the dimming element 5 that needs to be shielded.

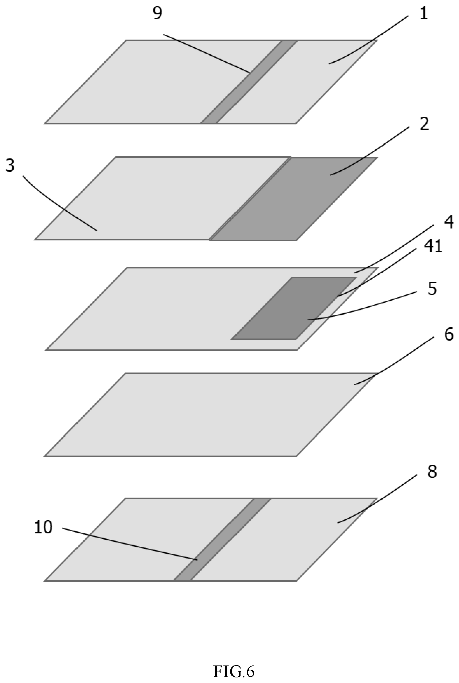

As shown in FIG. 6, in a third embodiment, the laminated glass comprises an outer glass plate 1, a first bonding layer 3, a carrier layer 4, a dimming element 5, a second bonding layer 6, an inner glass plate 8, a first shielding layer 9, and a second shielding layer 10.

The third embodiment differs from the above second embodiment mainly in that the second bonding layer 6 is a single-piece transparent wedge-shaped film 7, that is, the form of using a single-piece wedge-shaped film 7 as the second bonding layer 6 is adopted instead of the form of forming the second bonding layer 6 by filling a wedge-shaped film 7 in a PVB film of uniform thickness.

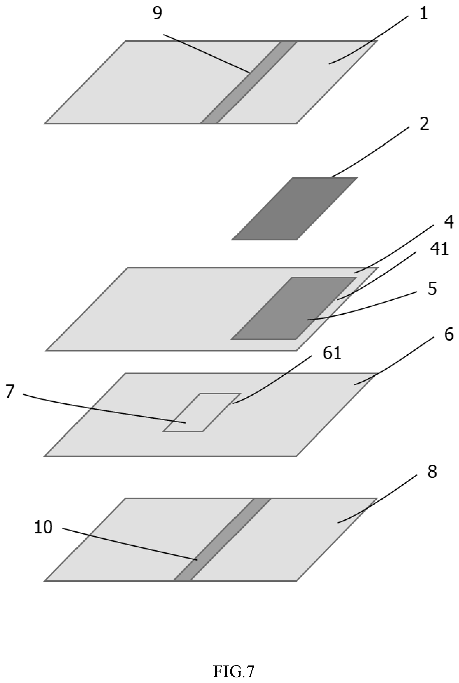

As shown in FIG. 7, in a fourth embodiment, the laminated glass comprises an outer glass plate 1, a colored layer 2 (first bonding layer 3), a carrier layer 4, a dimming element 5, a second bonding layer 6, a wedge-shaped film 7, an inner glass plate 8, a first shielding layer 9, and a second shielding layer 10.

The fourth embodiment differs from the above second embodiment mainly in that the first bonding layer 3 and the colored layer 2 are integrated into one layer. Or in other words, the first bonding layer 3 is a colored layer 2 that matches the first notch 41 in dimension. A sum of thicknesses of the colored layer 2 and the dimming element 5 is equal to a thickness of the carrier layer 4.

For example, a PVB film with a thickness of 0.76 mm may be selected as the carrier layer 4, a colored PVB film with a thickness of 0.38 mm may be selected as the colored layer 2, and an EC film with a thickness of 0.38 mm may be selected as the dimming element 5. The selection of providing the colored layer 2 in the first notch 41 by filling is conducive to reducing the thickness of the laminated glass, thereby reducing the weight and cost of the laminated glass. The integration of the first bonding layer 3 and the colored layer 2 into one layer may be understood as a reduction of one layer of PVB film (first bonding layer 3).

Furthermore, when the colored layer 2 is provided in the first notch 41 by filling, since the entire periphery of the colored layer 2 can be effectively constrained by the border of the first notch 41 during filling, the yield rate of manufacturing the laminated glass can be increased.

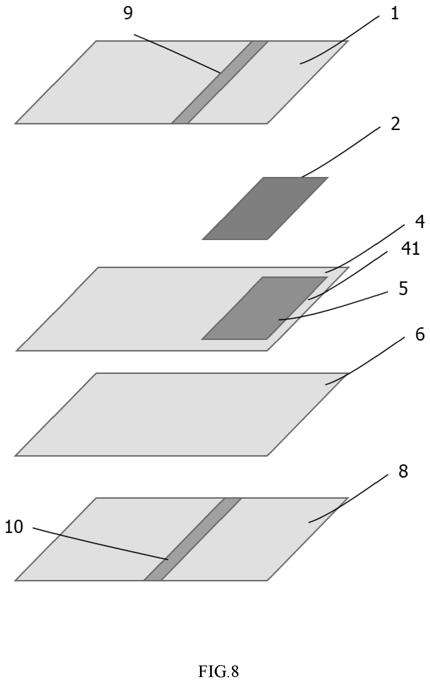

As shown in FIG. 8, in a fifth embodiment, the laminated glass comprises an outer glass plate 1, a colored layer 2 (first bonding layer 3), a carrier layer 4, a dimming element 5, a second bonding layer 6 (wedge-shaped film 7), an inner glass plate 8, a first shielding layer 9, and a second shielding layer 10.

The fifth embodiment differs from the above fourth embodiment mainly in that the second bonding layer 6 is a single-piece transparent wedge-shaped film 7. That is, the form of using a single-piece wedge-shaped film 7 as the second bonding layer 6 is adopted instead of the form of forming the second bonding layer 6 by filling a wedge-shaped film 7 in a PVB film of uniform thickness.

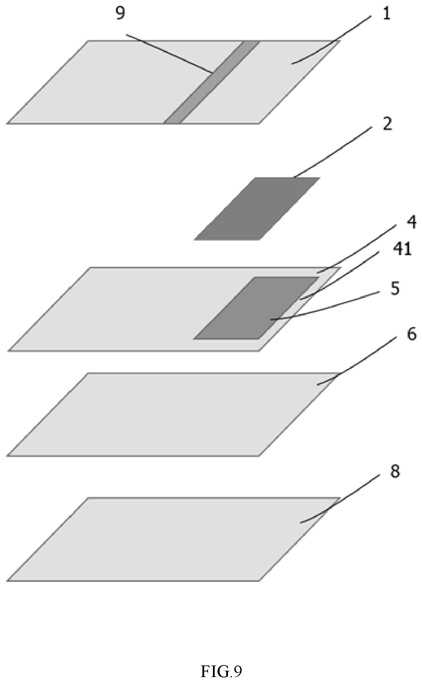

As shown in FIG. 9, in a sixth embodiment, the laminated glass comprises an outer glass plate 1, a colored layer 2 (first bonding layer 3), a carrier layer 4, a dimming element 5, a second bonding layer 6, an inner glass plate 8, and a first shielding layer 9.

The sixth embodiment differs from the above fifth embodiment mainly in that the second shielding layer 10 on the inner glass plate 8 is omitted.

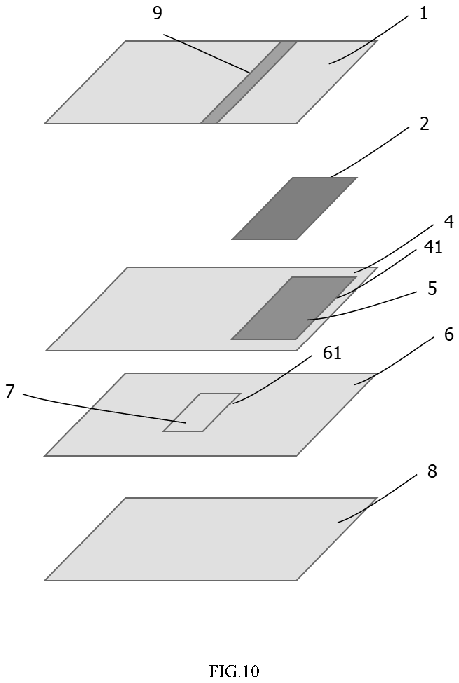

As shown in FIG. 10, in a seventh embodiment, the laminated glass comprises an outer glass plate 1, a colored layer 2 (first bonding layer 3), a carrier layer 4, a dimming element 5, a second bonding layer 6, a wedge-shaped film 7, an inner glass plate 8, and a first shielding layer 9.

The seventh embodiment differs from above the sixth embodiment mainly in that:
in this embodiment, the wedge-shaped film 7 is provided in the second bonding layer 6 by filling, which can reduce the production cost. Furthermore, since the entire periphery of the wedge-shaped film 7 can be effectively constrained by the second notch 61 during filling, the yield rate of the laminated glass can be ensured.

Alternatively, when the seventh embodiment is compared with the fourth embodiment, the seventh embodiment differs from the above fourth embodiment mainly in that the second shielding layer 10 on the inner glass plate 8 is omitted.

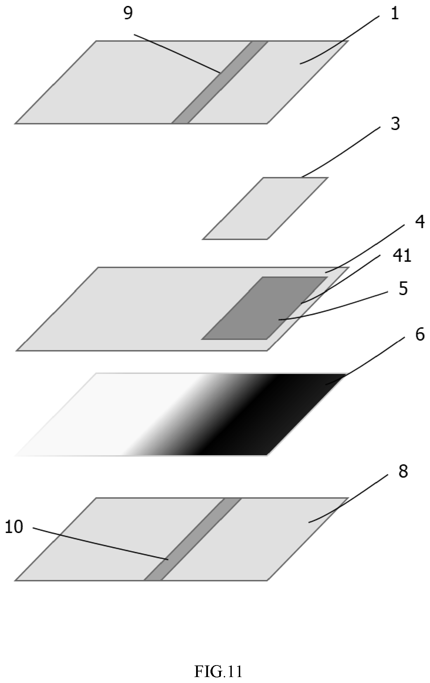

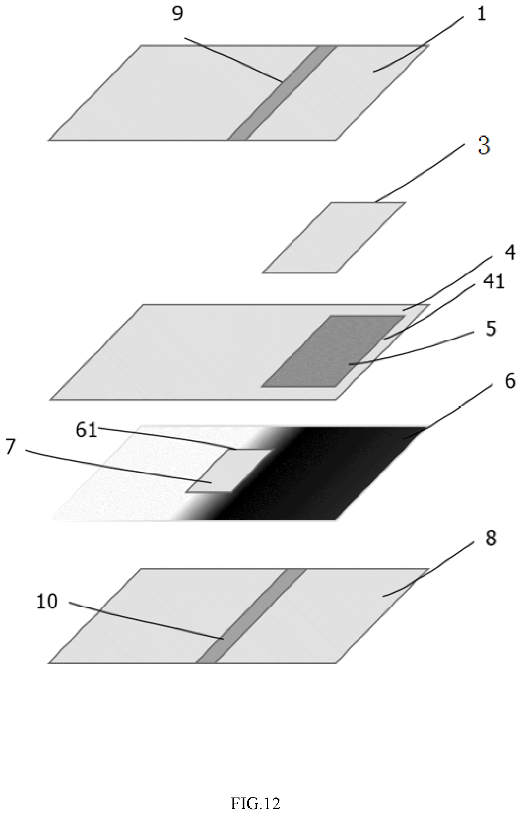

As shown in FIG. 11 or FIG. 12, in some embodiments, the second bonding layer 6 may be a gradient film with a uniform thickness whose color gradually deepens from the lower edge 102 to the upper edge 202. The use of this gradient film as the second bonding layer 6 may serve to provide the colored layer in the dimming area. The first bonding layer 3 is a transparent PVB film that fills the first notch 41.

As shown in FIG. 11, in an eighth embodiment, the laminated glass may comprise an outer glass plate 1, a first bonding layer 3, a carrier layer 4, a dimming element 5, a second bonding layer 6, a wedge-shaped film 7, an inner glass plate 8, and a first shielding layer 9. In this embodiment, a second shielding layer 10 may, or may not be included.

The eighth embodiment differs from the above seventh embodiment mainly in that the second bonding layer 6 is a PVB film with a uniform thickness whose color gradually deepens from the lower edge 102 to the upper edge 202. For example, the second bonding layer 6 is a gradient PVB film with a thickness of 0.76 mm, the second bonding layer 6 is provided with a second notch 61 for the provision of the wedge-shaped film 7, and a transparent PVB film is used as the first bonding layer 3. As another example, the second bonding layer 6 is a single-piece wedge-shaped film 7. That is, the form of using a single-piece wedge-shaped film 7 as the second bonding layer 6 is adopted instead of the form of forming the second bonding layer 6 by filling a wedge-shaped film 7 in a PVB film of uniform thickness.

As shown in FIG. 12, in a ninth embodiment, the laminated glass may comprise an outer glass plate 1, a first bonding layer 3, a carrier layer 4, a dimming element 5, a second bonding layer 6, a wedge-shaped film 7, an inner glass plate 8, a first shielding layer 9, and a second shielding layer 10.

The ninth embodiment differs from the above eighth embodiment mainly in that a second shielding layer 10 is also provided on the inner glass plate 8. Furthermore, in this embodiment, the wedge-shaped film 7 is provided in the second bonding layer 6 by filling.

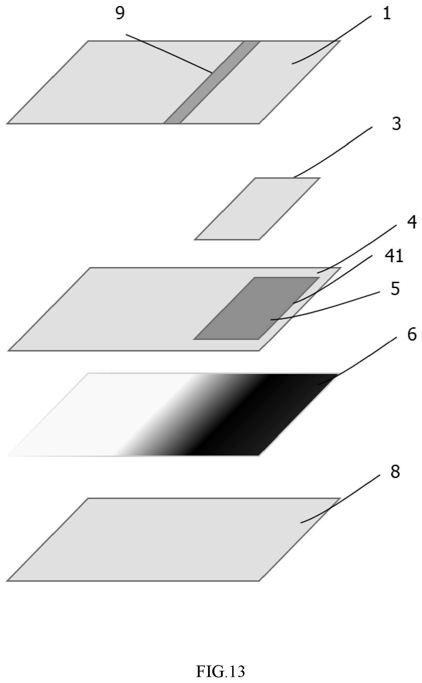

As shown in FIGS. 13 to 16, in some embodiments, the second bonding layer 6 is a single-piece gradient wedge-shaped film 7. Specifically, the color of the single-piece gradient wedge-shaped film 7 gradually deepens from the lower edge 102 of the laminated glass to the upper edge 202 of the laminated glass.

As shown in FIG. 13, in a tenth embodiment, the laminated glass may comprise an outer glass plate 1, a first bonding layer 3, a carrier layer 4, a dimming element 5, a second bonding layer 6, an inner glass plate 8, and a first shielding layer 9.

The tenth embodiment differs from the above sixth embodiment mainly in that the second bonding layer 6 is a single-piece wedge-shaped film 7, and the first bonding layer 3 is a transparent PVB film that fills the first notch 41.

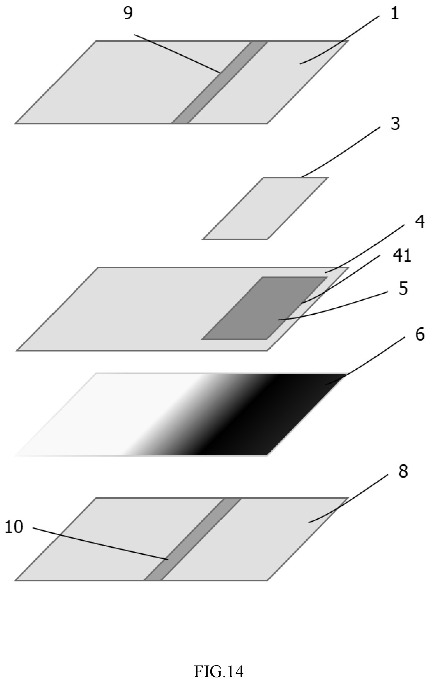

As shown in FIG. 14, in an eleventh embodiment, the laminated glass may comprise an outer glass plate 1, a first bonding layer 3, a carrier layer 4, a dimming element 5, a second bonding layer 6, an inner glass plate 8, a first shielding layer 9, and a second shielding layer 10.

The eleventh embodiment differs from the above fifth embodiment mainly in that the second bonding layer 6 is a single-piece gradient wedge-shaped film 7, and the first bonding layer 3 is a transparent PVB film that fills the first notch 41.

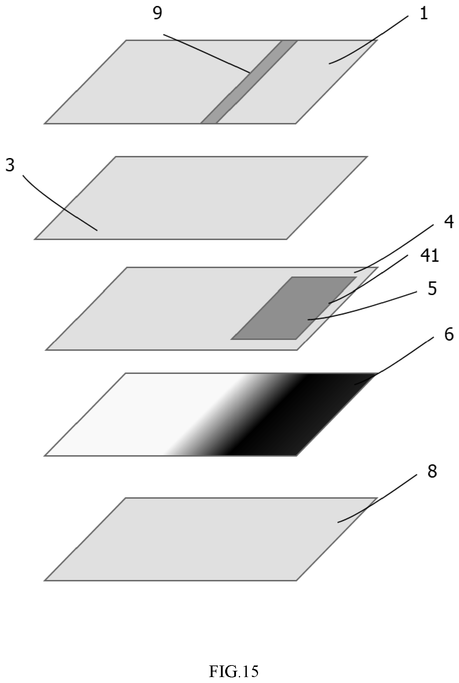

As shown in FIG. 15, in a twelfth embodiment, the laminated glass may comprise an outer glass plate 1, a first bonding layer 3, a carrier layer 4, a dimming element 5, a second bonding layer 6, an inner glass plate 8, and a first shielding layer 9.

The twelfth embodiment differs from the above tenth embodiment mainly in that the first bonding layer 3 is a single-piece PVB film with a uniform thickness.

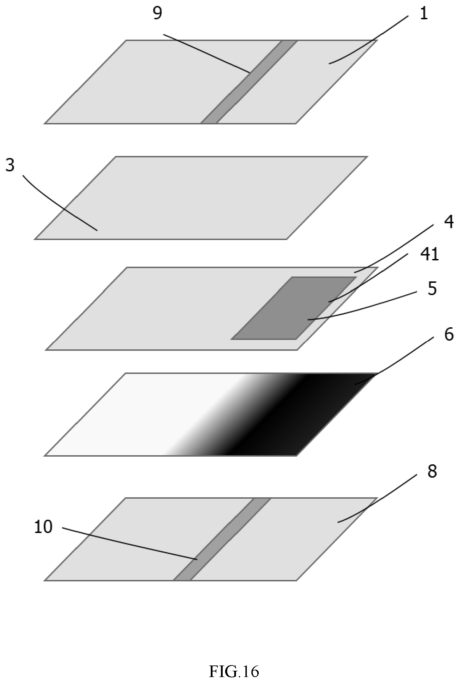

As shown in FIG. 16, in a thirteenth embodiment, the laminated glass may comprise an outer glass plate 1, a first bonding layer 3, a carrier layer 4, a dimming element 5, a second bonding layer 6, an inner glass plate 8, a first shielding layer 9, and a second shielding layer 10.

The thirteenth embodiment differs from the above eleventh embodiment mainly in that the first bonding layer 3 is a single-piece PVB film with a uniform thickness.

Furthermore, in each of the aforementioned embodiments, while the relative positions of the outer glass plate 1 and the inner glass plate 8 remain unchanged, the positions of the first bonding layer 3 and the second bonding layer 6 can be interchanged to form other embodiments.

The embodiments in the present disclosure also provide a vehicle, which mainly comprises the laminated glass as described above. A panoramic front windshield of the vehicle is formed by the laminated glass. The application of the laminated glass to the vehicle can achieve the technical effect realized by the embodiments of the laminated glass. For the details, please refer to the specific descriptions of the aforementioned embodiments, and no more elaboration will be given here.

It should be clearly stated that in the descriptions of the present disclosure, the terms such as "first" and "second" are used only for descriptive purposes and for distinguishing between similar objects, but do not represent a sequential order between them, and cannot be understood as indicating or implying a relative importance. In addition, in the descriptions of the present disclosure, the meaning of "a plurality of" means two or more, unless otherwise specified.

Each of the aforementioned embodiments in the present disclosure is described in a progressive manner. The same and similar parts between the embodiments can be cross-referenced. The highlight of each embodiment is the difference of it from the other embodiments.

The above are only several embodiments in the present disclosure. Although the embodiments disclosed in the present disclosure are described above, they are adopted only for the convenience of understanding the present disclosure, rather than to define the present disclosure. Any skilled persons in the technical field to which the present disclosure belongs may, without departing from the spirit and scope disclosed in the present disclosure, make any modification or change to the forms and details of the embodiments, but the patent protection scope of the present disclosure should still be subject to the scope defined in the attached claims.

## Claims

1. A laminated glass, **characterized in that** the laminated glass comprises an outer glass plate, an inner glass plate, and a bonding layer for bonding the outer glass plate and the inner glass plate;
the laminated glass has an upper edge and a lower edge, the laminated glass comprises a dimming area on a side close to the upper edge and a visual area on a side close to the lower edge, and a signal transmission area is provided in the visual area;
the bonding layer comprises a dimming element located in the dimming area;
at least in the signal transmission area, a thickness of the bonding layer on the side close to the upper edge is greater than a thickness of the bonding layer on the side close to the lower edge.

2. The laminated glass according to claim 1, **characterized in that** the laminated glass further comprises a first shielding layer provided on an inner surface of the outer glass plate, and the first shielding layer covers at least a side of the dimming element close to the lower edge of the laminated glass.

3. The laminated glass according to claim 1, **characterized in that** the laminated glass has a length ranging from 1300 mm to 1900 mm in an extension direction from the lower edge to the upper edge.

4. The laminated glass according to claim 1, **characterized in that** the dimming element comprises any one of a liquid crystal dye film, an electrochromism film, a suspended particle device film, and a polymer dispersed liquid crystal film.

5. The laminated glass according to claim 2, **characterized in that** the bonding layer comprises a colored layer with a visible light transmittance of less than 50%, the colored layer at least partially covers the dimming area, and the colored layer is stacked with the dimming element.

6. The laminated glass according to claim 5, **characterized in that** the bonding layer comprises at least a first bonding layer and a second bonding layer, and the first bonding layer and the second bonding layer cover two surfaces of the dimming element, respectively.

7. The laminated glass according to claim 6, **characterized in that** the colored layer is located in the first bonding layer or in the second bonding layer, and the colored layer is a uniformly colored film layer or is a gradient film layer whose color gradually lightens in a direction from the upper edge to the lower edge.

8. The laminated glass according to claim 7, **characterized in that** the colored layer is located in the first bonding layer, the first bonding layer is a colored layer, or the first bonding layer comprises a transparent film covering the visual area and a colored layer covering the dimming area, wherein the transparent film and the colored layer have a same thickness; and the second bonding layer is a transparent film.

9. The laminated glass according to claim 8, **characterized in that** when the first bonding layer comprises the transparent film covering the visual area and the colored layer covering the dimming area, the first shielding layer covers at least a splicing position between the transparent film and the colored layer.

10. The laminated glass according to claim 7, **characterized in that** the colored layer is located in the second bonding layer, the first bonding layer is a transparent film; the second bonding layer is a gradient film layer whose color gradually lightens in the direction from the upper edge to the lower edge.

11. The laminated glass according to claim 6, **characterized in that** at least in the signal transmission area, a thickness of the second bonding layer on the side close to the upper edge is greater than a thickness of the second bonding layer on the side close to the lower edge.

12. The laminated glass according to claim 11, **characterized in that** the second bonding layer is provided with a second notch in which a wedge-shaped film is provided, and a thickness of the wedge-shaped film gradually decreases in a direction from the upper edge to the lower edge.

13. The laminated glass according to claim 12, **characterized in that** a maximum thickness difference between the wedge-shaped film and the second bonding layer is within 0.5 mm.

14. The laminated glass according to claim 12, **characterized in that** a minimum height of the second notch 61 is ≥ 30mm, and a minimum width of the second notch 61 is ≥ 30mm.

15. The laminated glass according to claim 6, **characterized in that** the bonding layer further comprises a carrier layer serving as a carrier for the dimming element, and the carrier layer is provided with a first notch for being filled with the dimming element.

16. The laminated glass according to claim 15, **characterized in that** a width from the first notch to an edge of the carrier layer is at least 30 mm.

17. The laminated glass according to claim 15, **characterized in that** a thickness of the carrier layer is the same as a thickness of the dimming element; or
when the first notch is filled with the first bonding layer, a sum of thicknesses of the first bonding layer and the dimming element is equal to a thickness of the carrier layer.

18. The laminated glass according to claim 1, **characterized in that** the laminated glass further comprises a second shielding layer provided on an inner surface or an outer surface of the inner glass plate, and the second shielding layer covers at least a side of the dimming element close to the lower edge of the laminated glass.

19. The laminated glass according to claim 1, **characterized in that** the bonding layer has a thickness ranging from 0.3 mm to 2 mm.

20. A vehicle **characterized by** comprising the laminated glass as claimed in any one of claims 1 to 19.
